(19) **Europäisches Patentamt / European Patent Office / Office européen des brevets**

(11) **EP 2 880 472 B1**

(12) # FASCICULE DE BREVET EUROPEEN

(45) Date de publication et mention
de la délivrance du brevet:
**21.12.2016 Bulletin 2016/51**

(51) Int Cl.:
*G01W 1/10* (2006.01)       *G06Q 10/04* (2012.01)
*G06F 17/10* (2006.01)       *G06F 17/50* (2006.01)

(21) Numéro de dépôt: **13745064.9**

(22) Date de dépôt: **02.08.2013**

(86) Numéro de dépôt international:
**PCT/EP2013/066259**

(87) Numéro de publication internationale:
**WO 2014/023653 (13.02.2014 Gazette 2014/07)**

(54) **PROCÉDÉ DE LOCALISATION DE L'ORIGINE DE FLUX DE GAZ DANS UN ESPACE GÉOGRAPHIQUE, IMPLIQUANT UNE SÉLECTION DE MESURES**

VERFAHREN ZUR ORTUNG DER QUELLE VON GASSTRÖMEN IN EINEM GEOGRAFISCHEN BEREICH MIT EINER AUSWAHL VON MESSUNGEN

METHOD FOR LOCATING THE SOURCE OF GAS FLOWS IN A GEOGRAPHICAL AREA, INVOLVING A SELECTION OF MEASUREMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.08.2012 FR 1257639**

(43) Date de publication de la demande:
**10.06.2015 Bulletin 2015/24**

(73) Titulaire: **Commissariat à l'Énergie Atomique et aux Énergies Alternatives
75015 Paris (FR)**

(72) Inventeur: **LAUVAUX, Thomas
F-88100 Taintrux (FR)**

(74) Mandataire: **Brevalex
95, rue d'Amsterdam
75378 Paris Cedex 8 (FR)**

(56) Documents cités:
• T LAUVAUX ET AL: "Constraining the CO2 budget of the corn belt: exploring uncertainties from the assumptions in a mesoscale inverse system", ATMOSPHERIC CHEMISTRY AND PHYSICS, vol. 12, no. 1, 5 janvier 2012 (2012-01-05), pages 337-354, XP055061549, DOI: 10.5194/acp-12-337-2012 cité dans la demande

• KEVIN ROBERT GURNEY ET AL: "Towards robust regional estimates of CO2 sources and sinks using atmospheric transport models", NATURE, vol. 415, no. 6872, 7 février 2002 (2002-02-07), pages 626-630, XP055061732, ISSN: 0028-0836, DOI: 10.1038/415626a

• RICHARD J. ENGELEN: "On error estimation in atmospheric CO 2 inversions", JOURNAL OF GEOPHYSICAL RESEARCH, vol. 107, no. D22, 22 novembre 2002 (2002-11-22), XP055061733, ISSN: 0148-0227, DOI: 10.1029/2002JD002195

• LIN WU ET AL: "Optimal representation of source-sink fluxes for mesoscale carbon dioxide inversion with synthetic data", JOURNAL OF GEOPHYSICAL RESEARCH, vol. 116, no. D21, 5 novembre 2011 (2011-11-05), XP055061734, ISSN: 0148-0227, DOI: 10.1029/2011JD016198

• P. BOUSQUET: "Regional Changes in Carbon Dioxide Fluxes of Land and Oceans Since 1980", SCIENCE, vol. 290, no. 5495, 17 novembre 2000 (2000-11-17), pages 1342-1346, XP055061452, ISSN: 0036-8075, DOI: 10.1126/science.290.5495.1342

**Description**

L'invention présente a trait à un procédé de localisation d'origines et d'estimation de flux de gaz dans un espace géographique, impliquant une sélection de mesures. Elle peut trouver emploi notamment dans la détection de production de gaz à effet de serre afin de pouvoir attribuer leur origine à un acteur déterminé en fonction du lieu d'émission. Les flux sont ici des quantités d'apparition du gaz détecté, ou éventuellement des quantités de disparition, ce qu'on peut rencontrer par exemple dans des zones couvertes de végétation absorbant du gaz carbonique ; les flux associés à ces zones sont alors négatifs.

Le procédé s'effectue d'abord par des observations, c'est-à-dire des mesure de concentrations du gaz en différents lieux situés soit dans l'espace géographique dont on cherche à cartographier le flux, soit au voisinage de cet espace géographique. On dispose aussi de modèles permettant de simuler les déplacements du gaz depuis les lieux d'origine des flux jusqu'aux lieux de détection des concentrations, en considérant de nombreux paramètres incluant des caractéristiques météorologiques instantanées, parmi lesquelles on peut citer notamment la vitesse et la direction du vent. On dispose de modèles directs permettant de calculer des concentrations à l'aide de flux estimés a priori, et de modèles dits inverses ou adjoints permettant d'estimer les flux à l'aide des concentrations mesurées. Les observations sont faites périodiquement et les flux sont normalement aussi évalués pendant des durées importantes, voire constamment, puisqu'ils sont susceptibles de varier sans cesse.

Les phénomènes physiques que subit une atmosphère sont particulièrement complexes et leur modélisation est difficile, même en admettant des erreurs ou des incertitudes dans la modélisation des phénomènes physiques et dans les mesures. Le travail avec deux modèles différents dont les résultats peuvent être comparés est souvent nécessaire pour repérer des apparitions temporaires d'erreurs inadmissibles dans les résultats, repérés quand ceux-ci sont trop discordants. Les défauts de modélisation sont en effet différents pour les modèles direct et inverse, qui sont généralement de natures différentes (par exemple, respectivement Eulérien et Lagragien ou Eulérien et son adjoint linéarisé) et dont les maillages de discrétisation de l'espace géographique sont aussi différents.

Certaines conditions doivent être respectées pour obtenir une simulation réaliste de la dynamique atmosphérique. Une des conditions majeures d'utilisation repose sur la stabilité de l'atmosphère. Les conditions de stabilité correspondent aux régimes de la dynamique des fluides. Quand les conditions de stabilité (ou régimes) sont stables ou neutres, la dimension des processus physiques est trop petite pour être reproduite correctement par les modèles. Seules des conditions dites convectives ou instables offrent la possibilité de simuler correctement la dynamique observée. Les périodes stables ou neutres sont souvent caractérisées par des structures dynamiques de taille inférieure à la résolution du modèle. Bien que certaines paramétrisations sous maille existent, elles ne peuvent permettre que d'approcher la réalité observée. Or un système d'inversion utilisera une information précise sur la dynamique atmosphérique proche de la surface, quasi systématiquement erronée alors.

Dans ces conditions stables ou neutres, où le flux est laminaire avec des vitesses de vent vertical très faibles, la hauteur simulée de la couche limite atmosphérique est aussi quasi systématiquement erronée ainsi que la vitesse de mélange vertical, ce qui entraîne un biais (erreur systématique) des calculs faits par des modèles, les observations de mesures des concentrations, faites à une altitude particulière, ne pouvant plus être corrélées à la concentration réelle en ce lieu, qui doit tenir compte de la composition de l'atmosphère à toutes les altitudes. Et à certains moments, le mélange vertical peut être modélisé différemment par le modèle direct et le modèle inverse.

En pratique, la grande sensibilité des modèles aux erreurs de modélisation en conditions stable, neutre, et même en conditions instables plus favorables, engendre une grande variabilité dans les résultats entre les deux modèles, en terme d'amplitude aussi bien que de signes (biais positifs et négatifs). Les deux modèles, adjoint et direct, censés reproduire des résultats équivalents à partir de schémas physiques légèrement différents, produisent alors des résultats sensiblement différents, sans cohérence physique dans la majorité des cas. La comparaison des résultats de ces deux modèles (adjoint et direct) permet alors d'éliminer ces périodes d'observation sous différents régimes de stabilité atmosphérique pour ne pas biaiser les flux inverses. Il est préférable, voire nécessaire, que les observations de concentrations en gaz à effet de serre soient simplement éliminées pendant ces périodes. Sans cela, les flux estimés seraient affectés par des erreurs systématiques entraînant une surestimation ou une sous-estimation de l'ordre de 10 à 20% à l'échelle annuelle.

Dans certains procédés existants, les observations prises en période diurne sont seules prises en compte pour alimenter les modèles. Ce critère repose sur l'hypothèse que le rayonnement solaire entraîne forcément des conditions instables. Il est toutefois fastidieux de tenir compte des heures variables du lever et du coucher du soleil selon les saisons, et c'est pourquoi, dans la plupart de ces procédés, on agit de façon plus simple et les systèmes d'inversion n'utilisent qu'une partie des observations, en définissant la période favorable comme une plage horaire fixe. Un exemple est dans l'article du présent inventeur (T. Lauvaux) « Constraining the CO2 budget of the corn belt : exploring uncertainties from the assumptions in a mesoscale inverse system », Atmos. Chem. Phys. Discuss. 11, 20855-20888 doi :10.5194 (acpd - 11-20855-2011), 2011, où un seuil d'erreur associé au modèle adjoint est défini aux heures nocturnes à une valeur telle que presque toutes les observations externes sont écartées. Quatre éléments majeurs posent problème avec une telle plage.

En premier, si la plage est limitée par les heures du lever et du coucher du soleil hivernal en toutes saisons, elle est beaucoup réduite. Si au contraire elle est choisie sur une période de la journée qui s'étend au-delà des heures diurnes en hiver, elle entraîne l'utilisation d'observations nocturnes et donc suspectes pendant l'hiver.

En second, les conditions de stabilité dépendent également de la vitesse de vent horizontale, qui génère un mélange vertical par cisaillement. Il est donc observé, en dehors des heures d'ensoleillement en journée et même en période nocturne, des situations où les conditions de stabilité sont favorables, et les concentrations mesurées alors sont exploitables pour simuler correctement la dynamique atmosphérique. Avec une plage horaire fixe, les concentrations simulées lors de ces périodes ne sont pas utilisées, ce qui engendre une perte d'informations. Et réciproquement, des conditions stables peuvent survenir en période diurne, par certains temps froids notamment.

En troisième, si le passage des conditions instables à stables (en soirée par exemple) est marqué par un arrêt brutal du mélange vertical, donc facilement observable, le passage des conditions stables à instables est plus progressif (le matin par exemple). La mise en place de la couche limite atmosphérique qui correspond à la tranche de l'atmosphère affectée par un fort mélange vertical est lente et progressive. Il est donc difficile d'établir avec précision une limite fixe entre les heures dites convectives (conditions instables) et les heures dites stables, en particulier pendant ces phases de transition, et ce pour tous les jours de l'année.

De manière générale, la supposition faite qu'un régime de stabilité atmosphérique donné est favorable ou non à la réussite de la simulation reste mal défini et ne correspond qu'à une définition incomplète du problème.

La distinction entre périodes diurnes et périodes nocturnes ne permet donc pas de définir avec exactitude l'existence de conditions stables ou instables de l'atmosphère. D'autres critères peuvent également être utilisés pour détecter ces périodes stables, tels que les critères de stabilité (nombre de Richardson, vitesse de friction, etc.). Cependant, la relation entre les conditions de stabilité et les erreurs de simulation de la dynamique atmosphérique n'est pas précisément établie. Les modèles peuvent dans certains cas produire des résultats incohérents avant l'entrée en condition stable ou neutre (ou après la sortie).

On voit que ce critère d'exclusion de certaines périodes pèche à la fois parce que la corrélation entre les conditions stables ou instables de l'atmosphère et les insuffisances des modèles n'est pas parfaite, et que la corrélation entre ces conditions de l'atmosphère et les périodes de la journée n'est pas parfaite non plus.

Enfin, identifier une période favorable n'indique pas si le modèle est performant et répond aux hypothèses de l'inversion. Le modèle adjoint peut échouer en conditions instables, ou au contraire simuler correctement le transport du gaz en conditions stables.

Le présent procédé de détection de flux par une inversion des observations est original par une étape de présélection des observations qui est fondée sur un critère meilleur que celui dont on vient de discuter.

L'invention permet de mieux protéger les flux obtenus, dits optimisés par opposition à des flux a priori généralement utilisés dans ces procédés, des erreurs systématiques du modèle de transport.

Sous une forme générale, l'invention est relative à un procédé de détection cartographique de flux d'au moins un gaz dans un espace géographique, les flux étant des quantités d'apparition ou de disparition du gaz, comprenant des étapes de :

- mesures périodiques de concentrations du gaz dans l'espace géographique ou près dudit espace géographique, à des temps de mesure ;
- mesures périodiques de caractéristiques météorologiques, dont des vitesses et des directions de vents, dans une durée d'étude comprenant les temps de mesure, au moins dans l'espace géographique ;
- application de modèles numériques pour relier les flux aux concentrations, notamment en simulant des déplacements du gaz pendant la durée d'étude, et en exploitant les mesures des caractéristiques météorologiques et d'autres paramètres comprenant le temps ; les modèles numériques comprenant un modèle direct donnant des concentrations en fonction de flux estimés et un modèle inverse donnant des flux en fonction de concentrations mesurées ou estimées ;
- le procédé comprenant des exclusions de certaines des mesures des concentrations dans des conditions où les modèles sont considérés comme imprécis,

caractérisé en ce que le procédé comprend deux estimations des concentrations en utilisant le modèle direct et le modèle inverse ; un calcul d'une différence entre les estimations ; une comparaison de la différence avec un seuil ; les exclusions étant décidées pour des moments où la différence entre les deux estimations est supérieure au seuil.

Une grande partie de la valeur de l'invention provient de ce que le seuil est avantageusement calculé en fonction d'incertitudes ou d'erreurs sur le modèle, qu'il est en général variable avec le temps, et qu'il permet donc une plus grande sûreté pour écarter certaines observations.

L'invention sera maintenant décrite en liaison aux figures :

- la figure 1 est une vue d'un environnement de mesures ;
- la figure 2 est un graphique de comparaison de concentrations d'un gaz ;
- la figure 3 illustre la mise en oeuvre de l'invention.

Les procédés d'inversion du genre de l'invention produisent des flux optimisés ainsi que leurs erreurs à l'échelle kilométrique, en utilisant des observations de concentrations en gaz à effet de serre et des flux de gaz à effet de serre dits a priori. Ces flux a priori sont spatialisés et à des pas de temps sub-journaliers, et peuvent être issus d'un modèle ou d'une estimation basée sur des inventaires, des observations, ou encore issus d'un autre système d'inversion. Les flux a priori sont en pratique des estimations réparties dans l'espace des quantités de gaz, le plus souvent à effet de serre, émis de la surface, ou absorbés, dans le cas d'une surface recouverte de végétation par exemple. Les observations sont des quantités volumiques ou massiques de gaz à effet de serre mesurées dans l'atmosphère. En pratique, elles sont exprimées dans différentes unités, que cela soit en rapport molaire, rapport volumique, ou rapport massique. Ces observations sont donc des rapports de mélange du gaz considéré ($CO_2$, $CH_4$, $N_2O$, $CO$,...) et de l'air qui l'entoure. Ces observations de concentrations sont mesurées grâce à des instruments calibrés disposés sur des tours de mesure, dans des véhicules aériens, marins, ou terrestres, ou encore à distance pour des mesures de la colonne atmosphérique.

Le procédé utilise en définitive des flux pour l'a priori, et des concentrations atmosphériques pour les observations. On ne décrira pas ici les conditions aux limites qui peuvent être ajoutées comme une inconnue supplémentaire dans le système d'inversion. Ces conditions aux limites décrivent les concentrations en gaz à effet de serre aux bords du domaine de simulation. Elles ne font pas partie du produit principal du système (les flux optimisés), mais sont considérés comme une inconnue additionelle qu'il est nécessaire de caractériser.

Les deux quantités, flux a priori ou calculés et concentrations observées, représentent des mesures physiques différentes. Il est donc nécessaire de pouvoir traduire l'information d'une quantité vers l'autre, et inversement. Pour ce faire, le système utilise un modèle qui permet de lier ces deux quantités. Comme les flux émis à la surface sont transportés par l'atmosphère jusqu'aux points de mesure, les modèles utilisés ici sont des modèles atmosphériques qui permettent de simuler le transport entre l'instant et l'endroit où une molécule quelconque du gaz est émise et son point de mesure dans l'atmosphère. Ces modèles atmosphériques de transport simulent les variables internes et externes décrivant la dynamique et la physique de l'atmosphère à des échelles de temps horaires et sub-horaires. Aux échelles kilométriques ainsi qu'aux plus grandes échelles, ces modèles atmosphériques incluent de nombreux schémas numériques qui permettent de simuler la dynamique, et sont généralement appelés méso-échelle aux échelles kilométriques, ou modèles de circulation générale aux plus grandes échelles. Le procédé utilise enfin des algorithmes mathématiques pour estimer la solution optimale parmi l'information a priori (flux de surface et conditions aux limites). Ces méthodes sont connues sous le nom de méthodes de régularisation, d'assimilation, d'inversion, ou encore d'optimisation.

Le seul critère d'applicabilité du présent procédé repose sur l'utilisation d'un modèle adjoint ou inverse. Certaines méthodes, telles que les méthodes d'ensemble, peuvent faire abstraction du modèle adjoint en utilisant uniquement le modèle direct pour optimiser les flux. En dehors d'elles, tout procédé qui repose sur l'utilisation d'un modèle adjoint, soit le modèle direct simplifié ou modifié, soit un modèle différent utilisé comme adjoint du transport direct, peut bénéficier de la présente invention. Parmi les modèles adjoints convenables, on citera les modèles Lagrangiens dits particulaires, et les modèles Eulériens qui correspondent à une linéarisation du modèle direct, soit générée par une méthode automatisée comme l'utilisation du tangent linéaire, soit issue d'une construction « à la main » très laborieuse.

De plus, le procédé est en général statistique, ce qui signifie que la quantification des erreurs ou incertitudes est aussi voire plus importante que les valeurs absolues des résultats. L'utilisation d'observations qui serait incompatibles avec les erreurs prescrites serait néfaste autant sur les résultats en valeur absolue que sur les erreurs estimées a posteriori, qui seraient surestimées ou sous-estimées. Un but de l'invention est donc non seulement de mieux estimer les valeurs absolues les flux, mais les erreurs qu'on est susceptible de commettre dans l'estimation de ces valeurs absolues.

Les différentes composantes de l'inversion numérique nécessaire pour obtenir les flux à partir des concentrations mesurées sont ainsi caractérisées par leurs erreurs associées. Ces erreurs qui affectent les flux a priori ainsi que les observations de concentrations en gaz à effet de serre sont traitées par l'algorithme d'optimisation. Leur rôle est double, dans le sens où elles permettent de quantifier la précision sur les flux optimisés (détectés par le procédé), ansi que les valeurs de ces flux optimisés. En d'autres termes, une erreur mal quantifiée en entrée du système affecte la quantification des flux optimisés et leurs erreurs associées. Ces erreurs sont en pratique représentées par une variance qui affecte chaque valeur de flux ou chaque observation utilisée dans le système, ainsi que par des corrélations spatiales et temporelles qui traduit les relations entre ces variances. Le terme utilisé est covariance d'erreur des flux a priori et des observations. Une hypothèse particulière sur laquelle les erreurs reposent est que les erreurs d'observation ne sont pas biaisées. En d'autres termes, la moyenne des erreurs d'observation est nulle. Cette condition, si elle n'est pas respectée, engendre une introduction systématique d'erreurs issues des observations dans les flux optimisés. En particulier, les erreurs de modélisation du transport, qui font partie des erreurs d'observation, constituent la plus grande source d'erreurs systématiques dans les systèmes d'inversion. Tout biais dans le modèle atmosphérique peut alors induire des valeurs erronées de flux optimisés, ainsi qu'une sur- ou sous-évaluation des erreurs des flux optimisés.

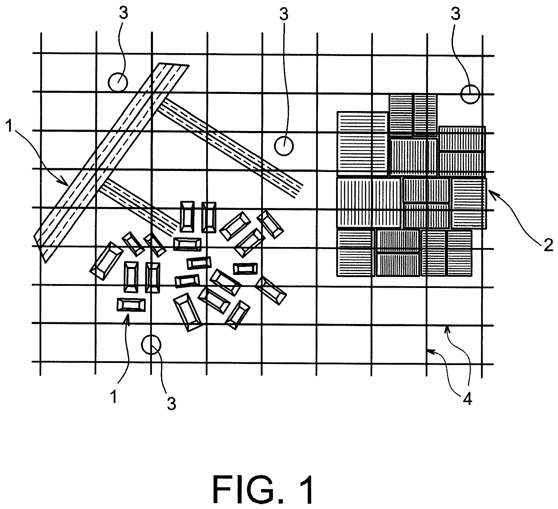

Se référant à la figure 1, on voit un espace géographique où des flux d'un gaz déterminé peuvent apparaître et qui comprend notamment des lieux 1 où ces flux apparaissent de façon privilégiée, éventuellement des lieux 2 où ils sont absorbés, et des stations 3 d'observation, qui mesurent les concentrations du gaz des flux et les paramètres météorologiques utiles pour la modélisation, en premier lieu la vitesse et la direction du vent, ainsi que la température, la pression, etc. Les stations 3 peuvent être placées dans l'espace géométrique même où les flux apparaissent ou sont absorbés, et aussi près de cet espace. Un maillage 4 couvre tout l'espace géographique considéré et le divise en parcelles pour les besoins de la modélisation. Les maillages peuvent être et sont d'ailleurs en général différents pour les deux modèles, le maillage du modèle inverse pouvant être sub-kilométrique alors que celui du modèle direct est en général plus large.

L'invention est fondée sur une comparaison entre deux estimations des concentrations découlant de l'application des modèles direct et inverse. Les concentrations sont générées par l'intermédiaire d'un modèle de transport atmosphérique capable de transporter des quantités finies d'un gaz (traceur) donné dans les champs dynamiques. Le gaz est représenté par une quantité libérée à chaque pas de temps et dans chaque point de l'espace qui est injectée au niveau de la surface. Cette masse est diluée dans la colonne d'air atmosphérique discrétisée en niveaux verticaux de quelques mètres à quelques dizaines de mètres en général. Le gaz représente typiquement un flux d'orgine anthropique ou biologique calculé à partir de données ou simulé par l'intermédiaire d'un modèle de végétation par exemple. Dans le cas des émissions liées à l'utilisation d'énergies fossiles, les flux proviennent de la combinaison de données de consommation d'énergie converties en quantité de gaz à effet de serre par l'intermédiaire de coefficients. Ces coefficients dits facteurs d'émission sont des mesures statistiques qui représentent la quantité moyenne de gaz à effet de serre émise en fonction de la quantité de carburant utilisé et du procédé impliqué. Par exemple, les émissions issues de la circulation combinent des mesures de flux routiers et des facteurs d'émission représentant les différents types de véhicules et leur efficacité énergétique. Le modèle adjoint, normalement utilisé pour estimer les flux, est ici appliqué en sens inverse, ce qui est possible et même simple puisqu'il est en général de nature linéaire. Le modèle direct et le modèle inverse fonctionnent alors concurremment en donnant des résultats de même catégorie, et qui seraient identiques si les modèles étaient parfaits. En utilisant les mêmes données initiales (les flux) pour les deux modèles, la seule cause de différence de leurs résultats provient alors des erreurs de transport, et donc des modèles eux-mêmes, ce qui est le cas quand on compare les concentrations du modèle direct avec celles du modèle inverse.

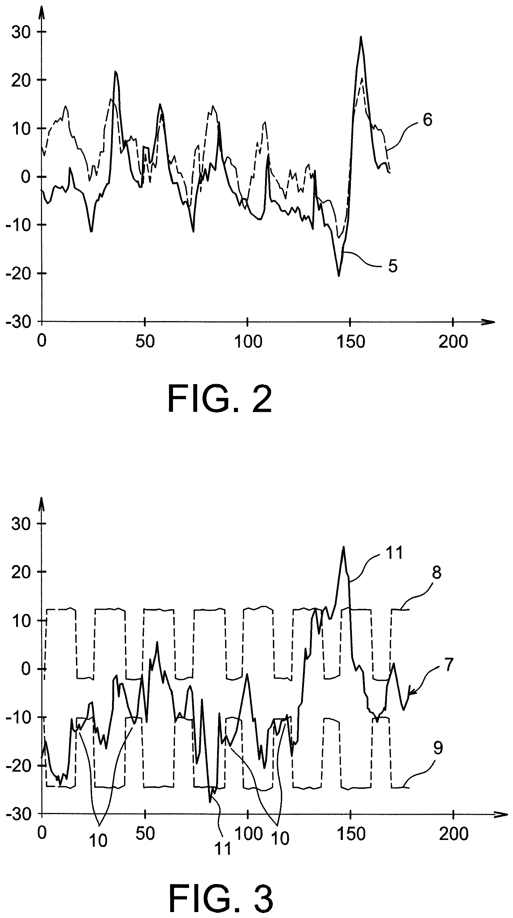

Les résultats obtenus sont du genre de celui de la figure 2 et comprennent une courbe de concentration atmosphérique d'un gaz à effet de serre issue du modèle direct H (appelée courbe directe) 5 et une courbe de concentration atmosphérique du même gaz issue du modèle inverse $H_{adj}$ (appelée courbe adjointe) 6 aux mêmes moments d'une durée d'étude qui est ici exprimée en heures, les concentrations étant exprimées en parties par millions dans l'atmosphère. Ces concentrations varient assez fortement et de façon plus ou moins cyclique avec le temps, et on observe des différences parfois importantes entre les deux courbes (la présence de concentrations négatives s'explique par la soustraction d'une valeur uniforme correspondant à une concentration naturelle moyenne, et ces concentrations négatives sont donc observées notamment quand la végétation absorbe le dioxyde de carbone par photosynthèse). Le modèle WRF (Weather Research Forecast) sur un maillage de 10 km de résolution fut utilisé comme modèle direct. Le modèle adjoint fut un modèle dit Lagrangien Particulaire de Dispersion LPDM décrit en 1995 et qui utilise différentes quantités et paramètres simulés par le modèle direct WRF comme la pression atmosphérique, la température, le vent, etc.

On peut supposer que les calculs entrepris par les modèles donnent des résultats fiables quand les deux évaluations des concentrations concordent, même si des exceptions (en général peu nombreuses) peuvent exister quand des erreurs systématiques de même sens sont commises dans les deux modèles ; mais les périodes de bonne concordance ne sont pas très nombreuses dans les mesures de la figure 1, et il est embarrassant de bien définir un seuil de discordance au-delà duquel l'exclusion des observations serait décidée, puisque les différences importantes sont acceptables quand les flux sont également importants.

Il est donc avantageux de fonder le critère de sélection des observations sur un seuil ou un filtre numérique qui dépend des incertitudes ou erreurs du procédé.

Une erreur $\varepsilon$ peut être calculée à partir d'une erreur a priori du flux à estimer et d'une erreur des observations notées B et $R_{dir}$, dans le cas du modèle direct H. Ces erreurs B et $R_{dir}$ sont matricielles. L'erreur peut être exprimée par

$$\varepsilon = \sqrt{variance\ (E(i))\ \ + covariance\ (E(i))}$$

où $E = HBH^T + R_{dir}$ à chaque pas de temps i en projection sur l'espace mathématique des concentrations.

L'erreur de B peut être estimée de tests de sensibilité s'il s'agit de flux issus d'un modèle. On teste la sensibilité du modèle aux paramètres par exemple, et on calcule ainsi l'erreur. On peut aussi utiliser des observations directes de flux. Dans ce cas, on compare le modèle de flux utilisé pour fournir les flux a priori. Cette méthode peut cependant être problématique car les mesures directes des flux représentent des espaces très faibles, inférieurs au kilomètre. Pour les erreurs d'observation R, elles comprennent plusieurs sources d'erreur, mais sont quasi systématiquement dominées par les erreurs de modélisation du transport. On peut donc réaliser des études de sensibilité du modèle de transport, avec des simulations d'ensemble. On peut aussi utiliser des données météorologiques, mais ceci reste plus délicat car cette matrice d'erreur R est définie dans l'espace des concentrations. Si on obtient une erreur sur le vent par exemple, il n'existe pas de moyens simples de convertir cela en erreur sur les concentrations.

On procède alors au calcul de la différence entre les deux estimations telles que celles qui sont fournies par les courbes 5 et 6, et qui peut être exprimée par la différence $H.x - H_{adj}^T.x$ dans le cas de flux x fournis en quantités connues (flux a priori) d'un gaz traceur, et où les concentrations estimées par les flux a priori au moyen du modèle direct sont égales à H.x.

On passe au commentaire de la figure 3. La courbe 7 correspond à la différence entre les deux estimations des concentrations, le seuil est fixé à $\pm(\sqrt{HBH^T + R_{dir}})$ avec des amplitudes variant fortement selon les périodes diurnes et nocturnes. Les seuils positifs et négatifs sont représentés par les courbes 8 et 9 de la figure 3.

Les observations correspondant au moment où la courbe 7 est dans l'intervalle défini par les seuils 8 et 9 sont acceptées, et les autres sont exclues. Les périodes d'exclusion les plus notables ont été référencées par 10 à la figure 3. Comme on pouvait s'y attendre, la plupart se trouvent pendant les périodes noctures, où les courbes 8 et 9 sont resserrées, mais de nombreuses observations faites pendant cette période nocturne sont tout de même considérées comme acceptables, alors que certaines observations faites pendant les périodes diurnes et référencées par 11 ne le sont pas.

L'invention constitue donc un perfectionnement important par rapport aux critères classiques de sélection des observations. Elle sera mise en oeuvre, en pratique, dans un système informatique composé d'un ordinateur ou d'un réseau d'ordinateurs sur lequel seront aussi implantés les modèles numériques utilisés pour estimer les flux de gaz.

## Revendications

**1.** Procédé de localisation d'origines de flux d'au moins un gaz dans un espace géographique, les flux étant des quantités d'apparition ou de disparition du gaz, comprenant des étapes de :

- mesures périodiques de concentrations du gaz dans l'espace géographique ou près dudit espace géographique, à des temps de mesure ;
- mesures périodiques de caractéristiques météorologiques, dont des vitesses et des directions de vents, dans une durée d'étude comprenant les temps de mesure, au moins dans l'espace géographique ;
- application de modèles numériques pour relier les flux aux concentrations, notamment en simulant des déplacements du gaz pendant la durée d'étude, et en exploitant les mesures des caractéristiques météorologiques et d'autres paramètres comprenant le temps ; les modèles numériques comprenant un modèle direct donnant des concentrations en fonction de flux estimés et un modèle inverse donnant des flux en fonction de concentrations mesurées ou estimées ;
- le procédé comprenant des exclusions de certaines des mesures des concentrations dans des conditions où les modèles sont considérés comme imprécis,

**caractérisé en ce que** le procédé comprend deux estimations des concentrations en utilisant le modèle direct et le modèle inverse ; un calcul d'une différence entre les estimations ; une comparaison de la différence avec un seuil ; les exclusions étant décidées pour des moments où la différence entre les deux estimations est supérieure au seuil.

**2.** Procédé selon la revendication 1, **caractérisé en ce que** le seuil est calculé en fonction d'incertitudes ou d'erreurs estimées.

**3.** Procédé selon la revendication 2, **caractérisé en ce que** les erreurs estimées comprennent des erreurs estimées sur des flux a priori.

**4.** Procédé selon la revendication 2 ou 3, **caractérisé en ce que** les erreurs estimées comprennent des erreurs estimées sur les observations.

**5.** Procédé selon les revendications 3 et 4, **caractérisé en ce que** le seuil est égal à $\pm(\sqrt{HBH^T + R_{dir}})$, ou B

est l'erreur sur les flux, a priori, $R_{dir}$ l'erreur du modèle direct sur les observations, et H et $H^T$ sont des applications du modèle direct.

6. Procédé selon l'une quelconque des revendications 4 ou 5, **caractérisé en ce que** les erreurs sur les observations ont une intensité variable, plus grande pendant des périodes nocturnes que des périodes diurnes.

**Patentansprüche**

1. Verfahren zur Ortung von Ursprüngen eines Flusses von wenigstens einem Gas in einem geographischen Raum, wobei der Fluss Mengen eines Auftretens oder eines Verschwindens des Gases ist, umfassend die Schritte:

   - periodisches Messen von Konzentrationen des Gases in dem geographischen Raum oder nahe dem geographischen Raum zu Messzeiten;
   - periodisches Messen von meteorologischen Charakteristiken, wie Geschwindigkeiten und Richtungen von Winden, während eines Lernzeitraums, welcher die Messzeiten umfasst, in wenigstens dem geographischen Raum;
   - Anwenden von numerischen Modellen zum Zuordnen der Flüsse zu den Konzentrationen, indem Verlagerungen des Gases während des Lernzeitraums simuliert werden, und indem die Messungen der meteorologischen Charakteristiken und andere Parameter, einschließlich der Zeit, verwendet werden; wobei die numerischen Modelle ein direktes Modell umfassen, welches Konzentrationen als Funktion von geschätzten Flüssen ergibt, sowie ein inverses Modell, welches Flüsse als Funktion von gemessenen oder geschätzten Konzentrationen ergibt;
   - wobei das Verfahren Ausschließungen bestimmter Messungen der Konzentrationen umfasst, in welchen Zustände oder Modelle als ungenau angesehen werden,

   **dadurch gekennzeichnet, dass** das Verfahren umfasst: zwei Schätzungen von Konzentrationen, indem das direkte Modell und das inverse Modell verwendet werden; eine Berechnung einer Differenz zwischen den Schätzungen; einen Vergleich der Differenz mit einem Schwellenwert; wobei die Ausschließungen für Momente entschieden werden, in welchen die Differenz zwischen den beiden Schätzungen größer als der Schwellenwert ist.

2. Verfahren nach Anspruch 1, **dadurch gekennzeichnet, dass** der Schwellenwert als Funktion von Unsicherheiten oder geschätzten Abweichungen berechnet wird.

3. Verfahren nach Anspruch 2, **dadurch gekennzeichnet, dass** die geschätzten Abweichungen Abweichungen umfassen, welche a priori über Flüsse geschätzt werden.

4. Verfahren nach Anspruch 2 oder 3, **dadurch gekennzeichnet, dass** die geschätzten Abweichungen Abweichungen umfassen, welche über die Beobachtungen geschätzt werden.

5. Verfahren nach den Ansprüchen 3 und 4, **dadurch gekennzeichnet, dass** der Schwellenwert gleich $\pm \left( \sqrt{HBH^T + R_{dir}} \right)$ ist, wobei B die Abweichung über die Flüsse a priori ist, $R_{dir}$ die Abweichung des direkten Modells über die Beobachtungen ist und H und $H^T$ die Anwendungen des direkten Modells sind.

6. Verfahren nach einem der Ansprüche 4 oder 5, **dadurch gekennzeichnet, dass** die Abweichungen über die Beobachtungen eine variable Intensität aufweisen, welche in nächtlichen Perioden größer ist als in täglichen Perioden.

**Claims**

1. A method for locating origins of streams of at least one gas in a geographical area, the streams being gas appearance or disappearance amounts, comprising the steps of:

   - periodic measurements of concentrations of the gas in the geographical area or close to said geographical area, at measurement times;
   - periodic measurements of weather characteristics, including speeds and directions of winds, in an investigation period of time comprising the measurement times, at least in the geographical area;

- application of numerical models to relate the streams to the concentrations, in particular by simulating displacements of the gas during the investigation period of time, and by exploiting the measurements of the weather characteristics and other parameters comprising time; the numerical models comprising a direct model giving concentrations as a function of assessed streams and a reverse model giving streams as a function of measured or assessed concentrations;

- the method comprising exclusions of some of the measurements of concentrations under conditions where the models are regarded as inaccurate,

**characterized in that** the method comprises two assessments of concentrations by using the direct model and the reverse model ; a computation of a difference between the assessments; a comparison of the difference with a threshold ; the exclusions being decided for moments when the difference between both assessments is higher than the threshold.

2.  The method according to claim 1, **characterized in that** the threshold is calculated as a function of assessed uncertainties or errors.

3.  The method according to claim 2, **characterized in that** the assessed errors comprise assessed errors on a priori streams.

4.  The method according to claim 2 or 3, **characterized in that** the assessed errors comprise assessed errors on observations.

5.  The method according to claims 3 and 4, **characterized in that** the threshold is equal to $\pm(\sqrt{HBH^T + R_{dir}})$, where B is the a priori error on the streams, $R_{dir}$ the error of the direct model on the observations, and H and $H^T$ are applications of the direct model.

6.  The method according to claim 4 or 5, **characterized in that** the errors on the observations have a variable intensity, which is greater during nocturnal periods than diurnal periods.

# FIG. 1

FIG. 2

FIG. 3

**RÉFÉRENCES CITÉES DANS LA DESCRIPTION**

**Littérature non-brevet citée dans la description**

- Constraining the CO2 budget of the corn belt : exploring uncertainties from the assumptions in a mesoscale inverse system. *Atmos. Chem. Phys. Discuss.,* 2011, vol. 11, 20855-20888